# EUROPEAN PATENT APPLICATION

(11) **EP 4 734 244 A1**
(43) Date of publication of application: **29.04.2026**
(21) Application number: 25207457.0
(22) Date of filing: 08.10.2025
(51) Int. Cl.: H01M 50/15, H01M 50/264, H01M 50/103, H01M 50/247, H01M 50/169, H01M 50/202

(54) **SECONDARY BATTERY AND METHOD FOR MANUFACTURING SAME, ELECTRONIC DEVICE INCLUDING SAME**

(30) Priority: 10.10.2024 KR 20240137286
(71) Applicant: SAMSUNG SDI CO., LTD., Yongin-si, Gyeonggi-do 17084 (KR)
(72) Inventor: HUR, Sangdo, 17084 Yongin-si, Gyeonggi-do (KR)
(74) Representative: Bardehle Pagenberg Partnerschaft mbB Patentanwälte Rechtsanwälte

(57) **Abstract**

A secondary battery may include an electrode assembly, a case accommodating the electrode assembly and including an electrode terminal coupled to an electrode tab of the electrode assembly, a case cover on an open side of the case, and a support portion protruding from the case cover to one side and coupled to a housing accommodating the case, wherein the support portion is configured to be elastically deformed and released from the housing based on receiving an external force.

## Description

### BACKGROUND

### 1. Field

The present disclosure relates to a secondary battery and a method for manufacturing the same, and an electronic device including the secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

When the life of the secondary battery is shorter than the life of the electronic device, the secondary battery may need to be replaced. However, if the secondary battery is an embedded type secondary battery in which the secondary battery is fastened to the electronic device, the secondary battery may not be easily removed or replaced.

The above information disclosed in this Background section is for enhancement of understanding of the background of the present disclosure, and therefore, it may contain information that does not constitute related (or prior) art.

### SUMMARY

According to the present invention, a secondary battery and a method for manufacturing a secondary battery as claimed in claims 1 and 9 are provided. Preferred embodiments of the invention are described in the dependent claims. Embodiments of the present disclosure provide a secondary battery and a method for manufacturing the same, and an electronic device including the secondary battery.

These and other aspects and features of the present disclosure will be described in or will be apparent from the following description of embodiments of the present disclosure.

According to one or more embodiments of the present disclosure, a secondary battery may include an electrode assembly, a case accommodating the electrode assembly and including an electrode terminal coupled to an electrode tab of the electrode assembly, a case cover on an open side of the case, and a support portion protruding from the case cover to one side and coupled to a housing accommodating the case, wherein the support portion may be elastically deformed and released from the housing based on receiving an external force.

In some embodiments, the support portion may include a connecting portion extending from the case cover and bent downward, and a catch portion extending from the connecting portion, bent upward to face the connecting portion, where the catch portion is configured to be supported based on being caught on an inner surface of the housing.

In some embodiments, the support portion may further include a reinforcing portion extending from the catch portion and overlapping the catch portion, where the reinforcing portion is a folded by folding a portion connected to the catch portion.

In some embodiments, the support portion may further include a reinforcing portion extended from the catch portion and overlapping the catch portion, wherein the reinforcing portion includes a folded portion generated by folding a portion connected to the catch portion in a folded state at least once.

In some embodiments, the support portion may further include a reinforcing portion extending from the catch portion and formed by rolling and rounding an end portion thereof.

In some embodiments, the catch portion may include a groove on a surface opposite to a surface facing the connecting portion, wherein the groove has a predetermined pattern.

In some embodiments, the support portion may further include a through hole penetrating the catch portion.

In some embodiments, the through hole includes a straight portion formed on a portion supported by the housing and formed parallel to a portion of the catch portion, and a curved portion formed roundly in an area connected to the connecting portion at opposite portions of the straight portion.

In some embodiments, the support portion may further include a through hole penetrating the catch portion and the reinforcing portion.

In some embodiments, a width of the support portion may be smaller than a width of the case cover.

In some embodiments, the case cover and the support portion may be integrally formed, and materials of the case cover and the support portion include stainless steel.

In some embodiments, the secondary battery may further include a protection circuit module coupled to a second side of the case and electrically connected to the electrode terminal.

In some embodiments, the protection circuit module may include a support groove recessed inward from opposite ends thereof and supported by being caught on a support protrusion formed in the housing.

According to one or more embodiments of the present disclosure, a method for manufacturing a secondary battery may include accommodating an electrode assembly in a case having an open side and including a first flange portion formed along a circumference, arranging a case cover including a second flange portion formed along the circumference and a protrusion protruding to one side on the open side of the case, welding the first flange portion and the second flange portion, cutting and removing an outer side of a welded area of the first flange portion and the second flange portion, and forming a support portion by bending the protrusion.

In some embodiments, the forming of the support portion may include forming, by bending the protrusion, a connecting portion bent downward from the case cover and a catch portion bent upward to face the connecting portion.

In some embodiments, the forming of the support portion may include forming a reinforcing portion by folding an end portion of the protrusion at least once, and forming, by bending the protrusion, a connecting portion bent downward from the case cover and a catch portion bent upward to face the connecting portion.

In some embodiments, the forming of the support portion may include forming a reinforcing portion by rounding and rolling an end portion of the protrusion, and forming, by bending the protrusion, a connecting portion bent downward from the case cover and a catch portion bent upward to face the connecting portion.

In some embodiments, the forming of the support portion may include forming a groove having a pattern by knurling an area of an opposite surface of a surface facing the connecting portion in the catch portion.

In some embodiments, the forming of the support portion may include forming a through hole penetrating the catch portion.

According to one or more embodiments of the present disclosure, an electronic device may include an operating unit that performs a preset operation, a housing accommodating the operating unit, and a secondary battery that may be detachably accommodated in the housing and supplies power to the operating unit. The secondary battery may include an electrode assembly, a case accommodating the electrode assembly and including an electrode terminal coupled to an electrode tab of the electrode assembly, a case cover on an open side of the case, and a support portion protruding from the case cover to one side and coupled to the housing accommodating the case, wherein the support portion is configured to be elastically deformed and released from the housing based on receiving an external force.

According to some embodiments of the present disclosure, the elastic support portion that couples the secondary battery to the housing may be deformed by an external force, allowing to separately (e.g., easily separate) from the housing, to allow the secondary battery to be replaced more easily.

According to some embodiments of the present disclosure, the thickness or strength of the catch portion formed on the elastic support that couples the secondary battery to the housing may be reinforced to increase the strength in a case where the elastic support is coupled to the housing.

According to some embodiments of the present disclosure, by forming the through hole, the uneven knurled groove, or the like in the catch portion of the elastic support portion that couples the secondary battery to the housing, convenience in a case where coupling the secondary battery to the housing may be increased.

According to some embodiments of the present disclosure, by forming the protection circuit module on the opposite side of one side of the case where the elastic support portion for coupling the secondary battery to the housing is formed, the catch-support force in a case where the case is inserted into the housing may be improved.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a perspective view of an example secondary battery according to some embodiments of the present disclosure.
FIG. 2 and FIG. 3 illustrate exploded perspective views of an example secondary battery according to some embodiments of the present disclosure.
FIG. 4 illustrates a side view of an example secondary battery according to some embodiments of the present disclosure.
FIG. 5 to FIG. 8 illustrate enlarged views of embodiments of an elastic support portion by extracting area A of FIG. 4.
FIG. 9 illustrates a partial cross-sectional view of an example secondary battery accommodated in a housing according to some embodiments of the present disclosure.
FIG. 10 illustrates a partial cross-sectional view of an example state in which a secondary battery is separated from the housing according to some embodiments of the present disclosure.
FIG. 11 illustrates a partial top plan view of an example housing in which a secondary battery is accommodated according to some embodiments of the present disclosure,
FIG. 12 illustrates a partial perspective view of an example elastic support portion of a secondary battery with a knurled groove according to some embodiments of the present disclosure.
FIG. 13 illustrates a partial perspective view of an example through hole formed in an elastic support portion of a secondary battery according to some embodiments of the present disclosure.
FIG. 14 illustrates a partial perspective view of an example protection circuit module of a secondary battery according to some embodiments of the present disclosure.
FIG. 15 illustrates a partial cross-sectional view of an example protection circuit module of a secondary battery according to some embodiments of the present disclosure.
FIG. 16 illustrates a flowchart of an example method for manufacturing a secondary battery according to some embodiments of the present disclosure.
FIG. 17 illustrates an example electrode assembly accommodated in a case in a method for manufacturing a secondary battery according to some embodiments of the present disclosure.
FIG. 18 illustrates an example case cover welded to a case in a method for manufacturing a secondary battery according to some embodiments of the present disclosure.
FIG. 19 to FIG. 22 illustrate examples for forming elastic support portions in a method for manufacturing a secondary battery according to some embodiments of the present disclosure.
FIG. 23 illustrates a perspective view of an example electronic device according to some embodiments of the present disclosure.
FIG. 24 illustrates an example of secondary battery disposed in an electronic device according to some embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local Patent Law.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (or under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

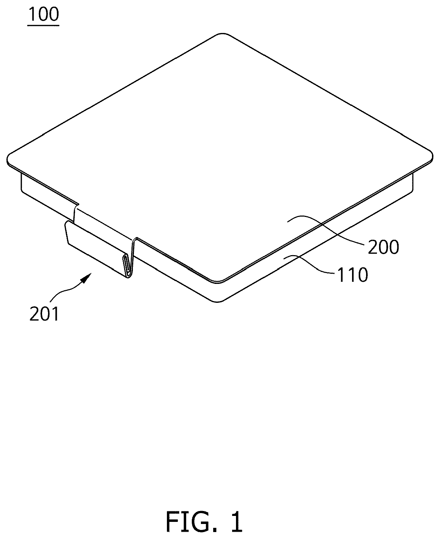

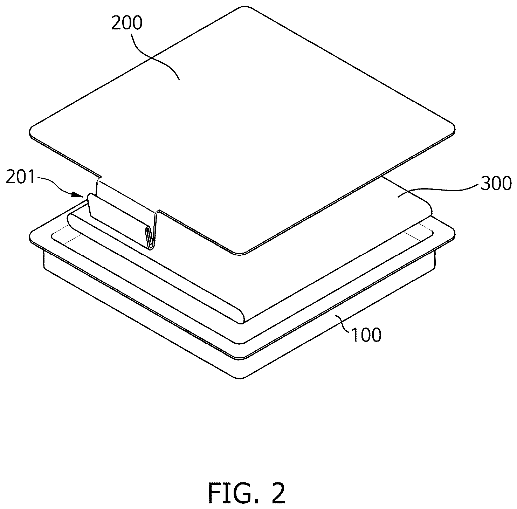

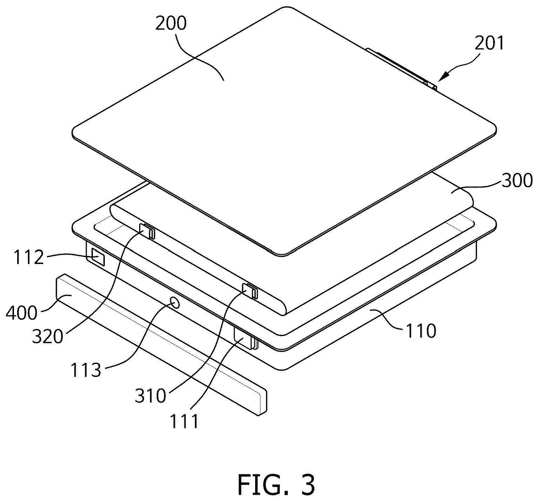

FIG. 1 illustrates a perspective view of an example secondary battery according to some embodiments of the present disclosure. FIG. 2 and FIG. 3 illustrate exploded perspective views of the example secondary battery according to some embodiments of the present disclosure.

Referring to FIG. 1 to FIG. 3, a secondary battery 100 according to some embodiments of the present disclosure may include an electrode assembly 300, a case 110 in which the electrode assembly 300 is accommodated and that includes electrode terminals 111 and 112 coupled to electrode tabs 310 and 320 of the electrode assembly 300, a case cover 200 that seals an open side of the case 110, and a support portion (e.g., an elastic support portion) 201 that protrudes from one side of the case cover 200 and is coupled to a housing in which the case 110 is accommodated, and is elastically deformed and released from the housing based on an external force. In some embodiments, the secondary battery 100 may further include a protection circuit module 400 electrically connected to the electrode terminals 111 and 112.

An electrode assembly 300 may be formed by winding or stacking a stack of a first electrode plate, a separator, and a second electrode plate, which are formed as thin plates or films. When the electrode assembly 300 is a wound stack, a winding axis may be parallel to the longitudinal direction (e.g., the y direction) of the case 110. In other embodiments, the electrode assembly 300 may be a stack type rather than a winding type, and the shape of the electrode assembly 300 is not limited in the present disclosure. In addition, the electrode assembly 300 may be a Z-stack electrode assembly 300 in which a positive electrode plate and a negative electrode plate are inserted into both sides of a separator, which is then bent into a Z-stack. In addition, one or more electrode assemblies may be stacked such that long sides of the electrode assemblies are adjacent to each other and accommodated in the case 110, and the number of electrode assemblies in the case 110 is not limited in the present disclosure. The first electrode plate of the electrode assembly 300 may act as a negative electrode, and the second electrode plate may act as a positive electrode. Of course, the reverse is also possible.

The first electrode plate may be formed by applying a first electrode active material, such as graphite or carbon, to a first electrode current collector formed of a metal foil, such as copper, a copper alloy, nickel, or a nickel alloy. The first electrode plate may include a first electrode tab 310 (e.g., a first uncoated portion) that is a region to which the first electrode active material is not applied. The first electrode tab 310 may act as a current flow path between the first electrode plate and the first current collector. In some embodiments, when the first electrode plate is manufactured, the first electrode tab 310 may be formed by being cut in advance to protrude to one side of the electrode assembly 300, or the first electrode tab 310 may protrude to one side of the electrode assembly 300 more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 320 (e.g., a second uncoated portion) that is a region to which the second electrode active material is not applied. The second electrode tab 320 may act as a current flow path between the second electrode plate and the second current collector. In some embodiments, the second electrode tab 320 may be formed by being cut in advance to protrude to the other side (e.g., the opposite side) of the electrode assembly 300 when the second electrode plate is manufactured, or the second electrode plate may protrude to the other side of the electrode assembly 300 more than (e.g., farther than or beyond) the separator without being separately cut.

In some embodiments, the first electrode tab 310 may be located on the left side of the electrode assembly 300, and the second electrode tab 320 may be located on the right side of the electrode assembly 300. In other embodiments, the first electrode tab 310 and the second electrode tab 320 may be located on one side of the electrode assembly 300 in the same direction. Here, for convenience of description, the left and right sides are defined according to the secondary battery as oriented in FIG. 3, and the positions thereof may change when the secondary battery is rotated left and right or up and down.

The case 110 may form or provide an overall external appearance of the secondary battery 100. The case 110 may be made of stainless steel (SUS). However, it is not limited thereto, and the case 110 may be substantially made of a conductive metal such as aluminum, an aluminum alloy, or nickel-plated steel.

One surface of the case 110 may be opened to accommodate the electrode assembly 300. After the electrode assembly 300 is accommodated in the case 110, the case cover 200 may be coupled to one open surface of the case 110 to seal the case 110. The case cover 200 may be made of the same material as the case 110.

The first electrode terminal 111 and the second electrode terminal 112 may be spaced apart from each other on one side surface of the case 110. However, the present disclosure is not limited thereto, and the first electrode terminal 111 and the second electrode terminal 112 may be disposed on different side surfaces. The first electrode tab 310 of the electrode assembly 300 may be coupled and electrically connected to the first electrode terminal 111, and the second electrode tab 320 of the electrode assembly 300 may be coupled and electrically connected to the second electrode terminal 112.

An injection hole 113 may be formed between the first electrode terminal 111 and the second electrode terminal 112. The injection hole 113 may be sealed by a sealing member after injecting an electrolyte into the case 110.

The case cover 200 may be formed in a plate shape and may be coupled to one open surface of the case 110 to seal the case 110. In some embodiments where the case 110 is configured in a prismatic shape, the case cover 200 may be configured in a quadrangular plate shape.

The elastic support portion 201 may protrude from one side of the case cover 200 and may be configured to attach and detach the case 110 to the housing. The elastic support portion 201 may be integrally formed with the case cover 200. In some embodiments, a protrusion protruding from one side of the case cover 200 may be integrally formed by punching or notching a flat plate, and the elastic support portion 201 may be integrally formed by bending and deforming the protrusion. In some embodiments, the case cover 200 and the elastic support 201 may be made of the same material.

As shown in FIG. 1, the width of the elastic support portion 201 may be formed to be smaller than the width of the case cover 200. However, it is not limited thereto, and the width of the elastic support portion 201 may be substantially the same as or similar to the width of the case cover 200.

The elastic support portion 201 may be configured according to various embodiments as described in more detail below.

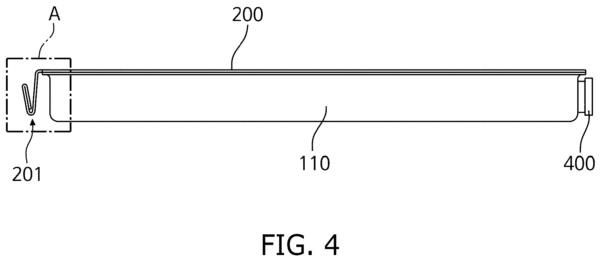

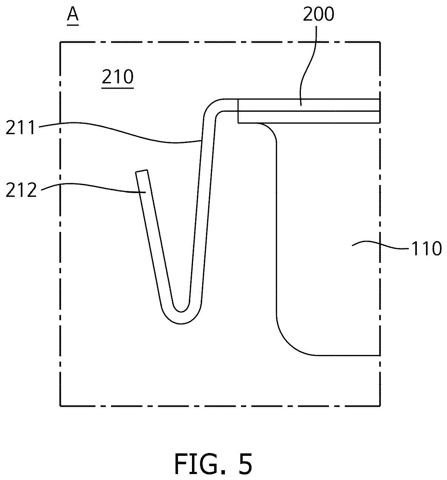

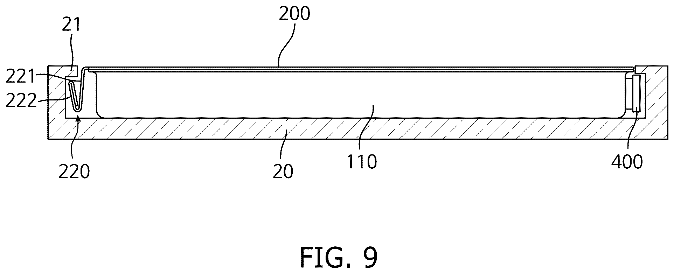

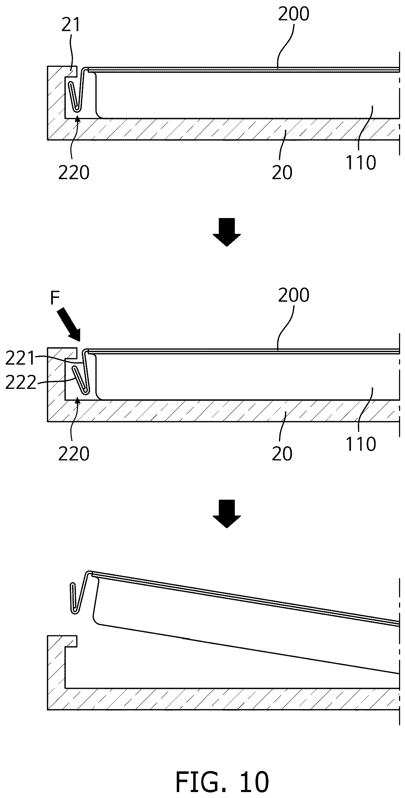

FIG. 4 illustrates a side view of an example secondary battery according to some embodiments of the present disclosure. FIG. 5 to FIG. 8 illustrate enlarged views of embodiments of an elastic support portion by extracting area A of FIG. 4. FIG. 9 illustrates a partial cross-sectional view of an example secondary battery accommodated in a housing according to some embodiments of the present disclosure. FIG. 10 illustrates a partial cross-sectional view of an example state in which a secondary battery is separated from the housing according to some embodiments of the present disclosure.

Referring to FIG. 4 to FIG. 10, the elastic support portion 201 may protrude to one side of the case cover 200 and may be coupled to a housing 20 in which the case 110 is accommodated to reduce the chance or prevent the case 110 from being separated from the housing 20. In some embodiments, the elastic support portion 201 is elastically deformed based on an external force being applied. In an embodiment where the external force F is applied in the direction in which the elastic support portion 201 is separated from the housing 20, the elastic support portion 201 receiving the external force is elastically deformed and released from the housing 20 to allow the case 110 to be separately (e.g., easily separated) from the housing 20. The elastic support portion 201 may be configured according to various embodiments.

Referring to FIG. 5, the elastic support portion 210 according to one embodiment may include a connecting portion 211 that extends from the case cover 200 and is bent downward, and a catch portion 212 that extends from the connecting portion 211 and is bent upward to face the connecting portion 211 and is supported by being caught to the inner surface of the housing 20.

An end portion of the catch portion 212 may be disposed at a position lower than an end portion of the connecting portion 211. For example, the end portion of the catch portion 212 may be disposed at a position lower than the height of the case cover 200. The connecting portion 211 may be formed to be inclined in a direction away from the case 110 while being bent downward. The catch portion 212 may be formed to be inclined in a direction away from the connecting portion 211 while being bent upward. In some embodiments, the connecting portion 211 and the catch portion 212 may substantially have a V-shape.

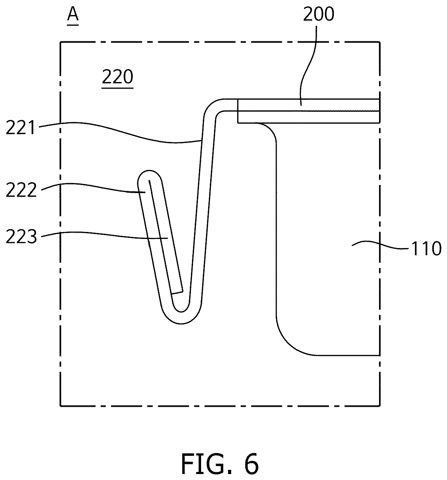

Referring to FIG. 6, the elastic support portion 220 of one embodiment may include a connecting portion 221 that extends from the case cover 200 and is bent downward, a catch portion (also referred to as a locking portion) 222 that extends from the connecting portion 221 and is bent upward to face the connecting portion 221 and is supported by being caught on the inner surface of the housing 20, and a reinforcing portion 223 that extends from the catch portion 222 and is disposed or arranged so that the portion connected to the catch portion 222 is folded to overlap the catch portion 222 and form a folded portion.

A portion to which the catch portion 222 and the reinforcing portion 223 are connected may be disposed at a position lower than an end portion of the connecting portion 221. For example, a portion to which the catch portion 222 and the reinforcing portion 223 are connected may be disposed at a position lower than the height of the case cover 200. The connecting portion 221 may be formed to be inclined in a direction away from the case 110 while being bent downward. The catch portion 222 may be formed to be inclined in a direction away from the connecting portion 221 while being bent upward. In some embodiments, the connecting portion 221 and the catch portion 222 may substantially have a V-shape.

The reinforcing portion 223 may be configured to increase or reinforce the strength of the catch portion 222 by folding a portion connected to the catch portion 222 and arranging or disposing it to overlap the catch portion 222. For example, the portion where the catch portion 222 and the reinforcing portion 223 overlap is caught and supported on the inner surface of the housing 20. The increased or reinforced thickness of the portion where the elastic support portion 220 is coupled to the housing 20 allows for increased strength to the portion. The reinforcing portion 223 may be disposed or arranged to face the connecting portion 221. However, it is not limited thereto, and the reinforcing portion 223 may be disposed or arranged on a surface opposite to a surface facing the connecting portion 221 in the locking portion 222.

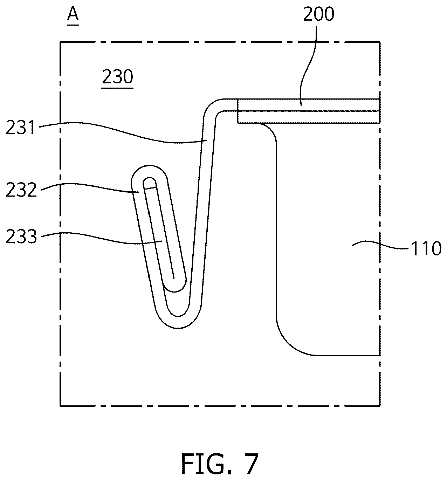

Referring to FIG. 7, the elastic support portion 230 according to one embodiment may include a connecting portion 231 that extends from the case cover 200 and is bent downward, a catch portion (also referred to as a locking portion) 232 that extends from the connecting portion 231 and is bent upward to face the connecting portion 231 and is supported by being caught on the inner surface of the housing 20, and a reinforcing portion 233 that extends from the catch portion 232 and is disposed or arranged to overlap the catch portion 232 by folding a portion that is connected to the catch portion 232 in a folded state at least once to form a folded portion.

A portion to which the catch portion 232 and the reinforcing portion 233 are connected may be disposed or arranged at a position lower than an end portion of the connecting portion 231. For example, a portion to which the catch portion 232 and the reinforcing portion 233 are connected may be disposed or arranged at a position lower than the height of the case cover 200. The connecting portion 231 may be formed to be inclined in a direction away from the case 110 while being bent downward. The catch portion 232 may be formed to be inclined in a direction away from the connecting portion 231 while being bent upward. In some embodiments, the connecting portion 231 and the catch portion 232 may substantially have a V-shape.

The reinforcing portion 233 may be configured to reinforce or increase the strength of the catch portion 232 by folding a portion connected to the catch portion 232 at least once and arranging or disposing it to overlap the catch portion 232. For example, the portion where the catch portion 232 and the reinforcing portion 233 overlap is caught and supported on the inner surface of the housing 20. The increased or reinforced thickness of the portion where the elastic support portion 230 is coupled to the housing 20 allows for increased strength to the portion. In the embodiment of FIG. 7, the reinforcing portion 233 is shown folded once, but it is not limited thereto, and may be disposed or arranged to overlap the catch portion 232 in a state in which it is folded twice or more. The reinforcing portion 233 may be disposed or arranged to face the connecting portion 231. However, it is not limited thereto, and the reinforcing portion 233 may be disposed or arranged on a surface opposite to a surface facing the connecting portion 231 in the locking portion 232.

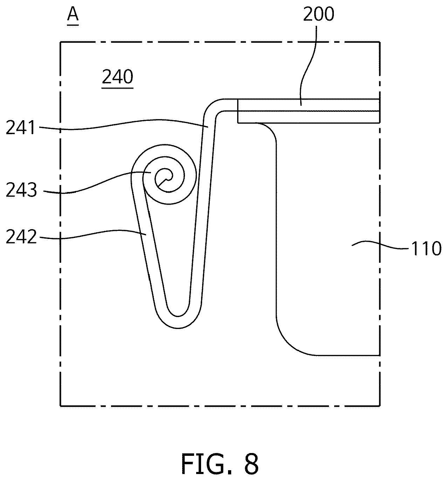

Referring to FIG. 8, the elastic support portion 240 according to one embodiment may include a connecting portion 241 that extends from the case cover 200 and is bent downward, a catch portion 242 that extends from the connecting portion 241 and is bent upward to face the connecting portion 241 and is supported by being caught on the inner surface of the housing 20, and a reinforcing portion 243 that extends from the catch portion 242 and is formed by rolling an end portion thereof in a round shape to form a rolled portion.

The reinforcing portion 243 formed at the end portion of the catch portion 242 may be disposed or arranged at a position lower than the end portion of the connecting portion 241. For example, the reinforcing portion 243 may be disposed or arranged at a position lower than the height of the case cover 200. The connecting portion 241 may be formed to be inclined in a direction away from the case 110 while being bent downward. The catch portion 242 may be formed to be inclined in a direction away from the connecting portion 241 while being bent upward. In some embodiments, the connecting portion 241 and the catch portion 242 may substantially have a V-shape.

The reinforcing portion 243 may be formed by rolling the reinforcing portion 243 in a roll shape, and may be disposed or arranged at an end portion of the catch portion 242 to reinforce or increase the strength of the catch portion 242. For example, the reinforcing portion 243 is caught and supported on the inner surface of the housing 20, allowing increased thickness of the portion where the elastic support portion 240 is coupled to the housing 20, for increased strength to the portion. The reinforcing portion 243 may be disposed or arranged to face the connecting portion 241. However, it is not limited thereto, and the reinforcing portion 243 may be disposed or arranged so as to face an opposite surface of a surface facing the connecting portion 241 in the locking portion 242.

As described above, the elastic support portion may be configured in various embodiments. Hereinafter, the elastic support portion 220 according to the embodiment described with respect to FIG. 6 is described in further detail below.

Referring to FIG. 9, when the case 110 is inserted into the housing 20, the elastic support portion 220 is elastically compressed and inserted into the housing 20. After the elastic support portion 210 is inserted into the inside of the housing 20, it may be elastically restored to allow the catch portion 212 to be caught and supported by a flange 21 protruding from the housing 20 toward the case 110.

Referring to FIG. 10, the case 110 may be separated from the housing 20 based on a user applying an external force (F) to the connecting portion 221 by using a finger or a tool that presses the connection portion. The connecting portion 221 may be elastically deformed and bent toward the case 110 in response to the application of the external force, and the catch portion 222 may together with the connection portion and become detached from the flange 21, allowing the case 110 to be separated (e.g., easily separated) from the housing 20.

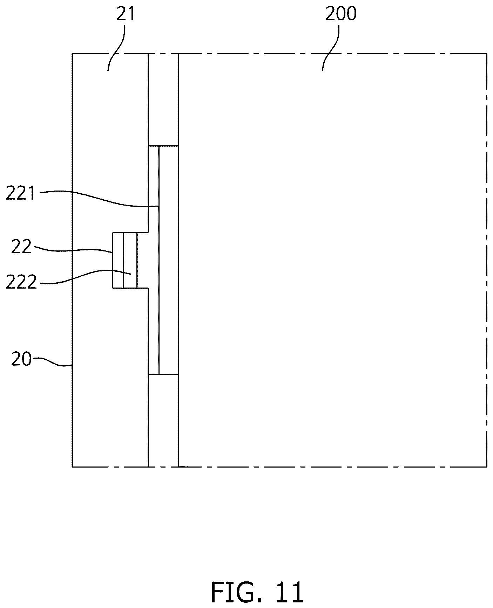

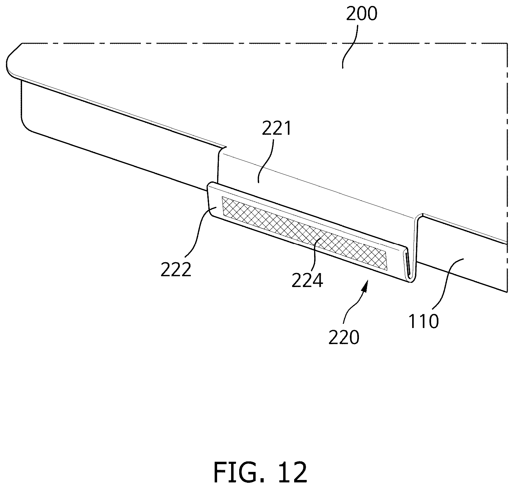

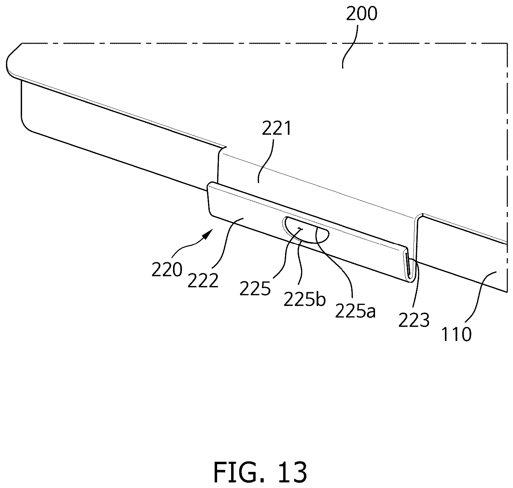

FIG. 11 illustrates a partial top plan view of an example housing in which a secondary battery is accommodated according to some embodiments of the present disclosure. FIG. 12 illustrates a partial perspective view of an example elastic support portion of a secondary battery with a knurled groove according to some embodiments of the present disclosure. FIG. 13 illustrates a partial perspective view of an example through hole formed in an elastic support portion of a secondary battery according to some embodiments of the present disclosure.

Referring to FIG. 11, in order to more easily deform the elastic support portion 220, an insertion hole 22 may be formed in the flange 21 on which the catch portion 222 is supported. In some embodiments, a user may insert a finger or a tool into the insertion hole 22 to press the outer surface of the catch portion 222 to elastically deform it.

In some embodiments, groove (e.g., an uneven knurled groove) 224 having a preset or predetermined pattern is formed on the outer surface of the catch portion 222 opposite to the surface facing the connecting portion 221 to provide frictional force. Based on the user's finger or the tool contacting the outer surface of the catch portion 222 and pressing the catch portion 222, the knurled groove 224 may provide frictional force so that the finger or the tool does not slip and may stably apply external force.

In some embodiments, a through hole 225 may be formed through the catch portion 222. The user may apply an external force while inserting the finger or the tool into the through hole 225 formed in the catch portion 222, so that the finger or the tool may stably apply the external force without slipping. The through hole 225 may be formed by penetrating the catch portion 222 and the reinforcing portion 223.

In some embodiments, the through hole 225 may include a straight portion 225a that is formed close to the end portion supported by the housing 20 and parallel to the end portion of the catch portion 222, and a curved portion 225b that is formed roundly in an area connected to the connecting portion 221 at opposite end portions of the straight portion 225a. This configuration may allow a user's finger to be inserted more easily into the through hole 225. However, the shape of the through hole 225 is not limited thereto, and it may be configured in any shape that allows receipt of a finger or a tool.

Referring to FIG. 12 and FIG. 13, the example where the knurled groove 224 and the through hole 225 are formed in the elastic support portion 220 of the embodiment of FIG. 6 is shown, but the present disclosure is not limited thereto, and they may also be formed in the elastic support portion 210 of the embodiment of FIG. 5, the elastic support portion 230 of the embodiment of FIG. 7, and/or the elastic support portion 240 of the embodiment of FIG. 8.

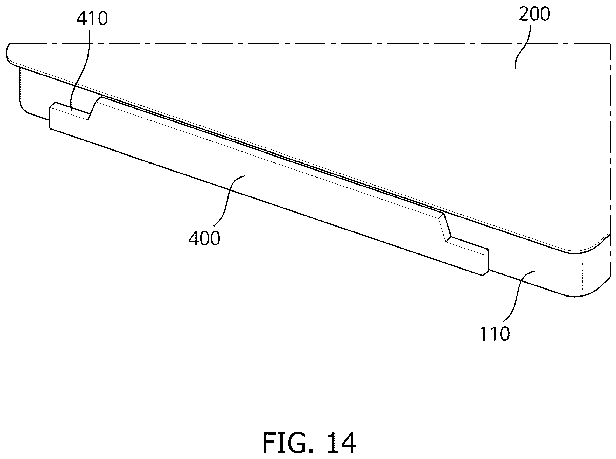

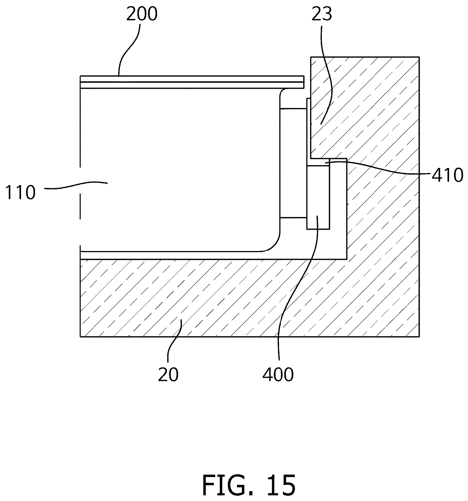

FIG. 14 illustrates a partial perspective view of an example protection circuit module of a secondary battery according to some embodiments of the present disclosure. FIG. 15 illustrates a partial cross-sectional view of the example protection circuit module of a secondary battery according to some embodiments of the present disclosure.

Referring to FIG. 14 and FIG. 15, the secondary battery according to some embodiments of the present disclosure may further include a protection circuit module 400 coupled to the opposite side of one side where the elastic support portion is formed in the case 110 and electrically connected to the electrode terminal.

The protection circuit module 400 may be electrically connected to the electrode assembly 300 to prevent overheating and explosion caused by overcharge, overdischarge, or overcurrent of the electrode assembly 300. The protection circuit module 400 may be configured to include safety elements, such as passive elements (e.g., resistors and capacitors), or active elements such as field-effect transistors, or protection circuit elements, in which integrated circuits may be selectively formed (e.g., formed on a printed circuit board).

The protection circuit module 400 may be disposed or arranged on one side surface of the case 110 to be electrically connected to the first electrode terminal and the second electrode terminal. The protection circuit module 400 may measure a voltage of the electrode assembly 300 and a current flowing through the electrode assembly 300 through the first electrode terminal and the second electrode terminal.

The protection circuit module 400 may include a support groove 410 that is recessed inward from opposite ends and is supported by being caught onto a support protrusion 23 formed in the housing 20. In some embodiments, the support groove 410 may be formed on a printed circuit board. This configuration may allow the support groove 410 of the protection circuit module 400 to be caught and supported by the support protrusion 23 of the housing 20 when the case 110 is inserted into the housing, helping improve the support force.

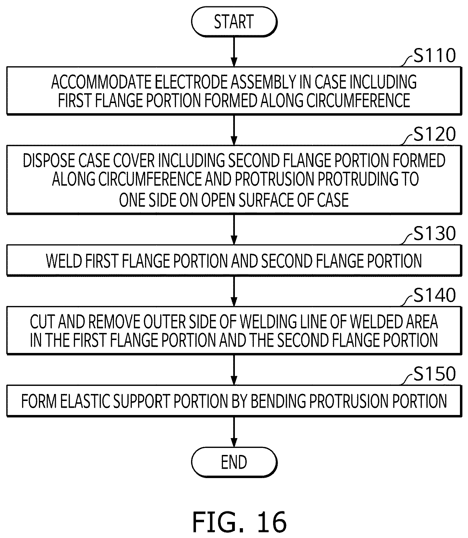

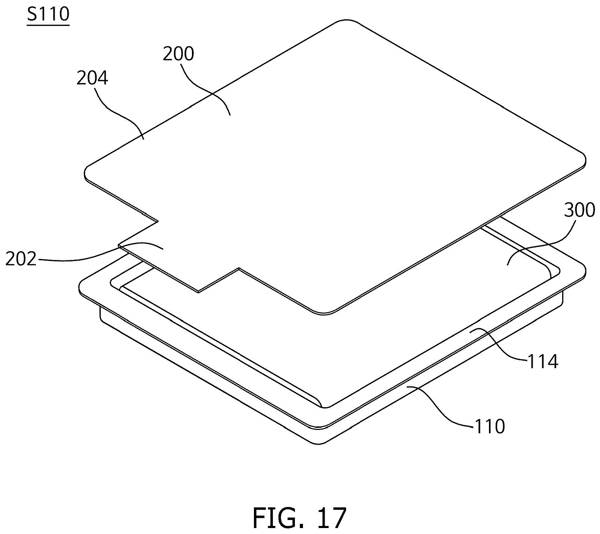

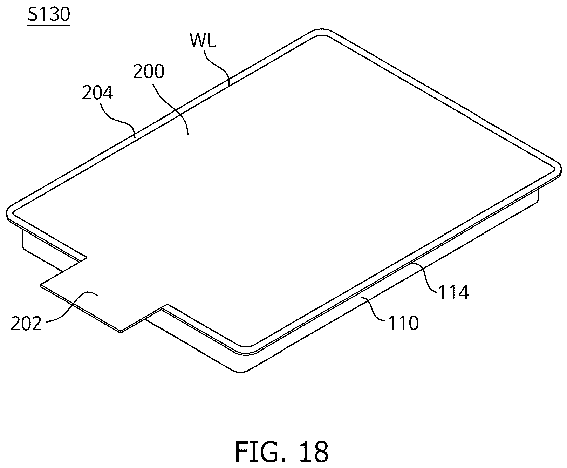

FIG. 16 illustrates a flowchart of an example method for manufacturing a secondary battery according to some embodiments of the present disclosure. FIG. 17 illustrates an example electrode assembly accommodated in a case in a method for manufacturing a secondary battery according to some embodiments of the present disclosure. FIG. 18 illustrates an example case cover welded to a case in a method for manufacturing a secondary battery according to some embodiments of the present disclosure.

Referring to FIG. 16, the method for manufacturing a secondary battery according to some embodiments of the present disclosure may include accommodating the electrode assembly 300 in the case 110 including a first flange portion 114 formed along a circumference and having an open surface (S110), arranging or disposing the case cover 200 including a second flange portion 204 formed along the circumference and a protrusion 202 protruding to one side, on the open surface of the case 110 (S120), welding the first flange portion 114 and the second flange portion 204 (S130), cutting and removing the outer side of a welding line WL forming a welded area in the first flange portion 114 and the second flange portion 204 (S140), and forming the elastic support portion by bending the protrusion portion 202 (S150).

As shown in FIG. 3, the accommodating of the electrode assembly 300 in the case 110 (S110) may be performed by accommodating the electrode assembly 300 in the case 110 in a state in which the first electrode tab 310 and the second electrode tab 320 of the electrode assembly 300 are electrically connected to the first electrode terminal 111 and the second electrode terminal 112 provided in the case 110, respectively. In some embodiments, the first electrode tab 310 and the second electrode tab 320 may be respectively coupled to the first electrode terminal 111 and the second electrode terminal 112 by welding.

Referring to FIG. 17 and FIG. 18, the welding of the first flange portion 114 and the second flange portion 204 (S130) may be laser-welding the first flange portion 114 and the second flange portion 204 by irradiating a laser beam along the welding line WL in a state in which the second flange portion 204 formed along the circumference of the case cover 200 is disposed or arranged on the upper surface of the first flange portion 114 formed along the circumference of the case 110.

The cutting and removing of the outer side of the welded area (S140) may be removing the first flange portion 114 and the second flange portion 204 after welding the first flange portion 114 and the second flange portion 204 along the welding line WL. In some embodiments, a cut may be made along the welding line WL within a range that reduces damage to, or does not damage, the welded area.

The forming of the elastic support portion (S150) may be bending the protrusion 202 to form the elastic support portion, and various types of elastic support portions may be formed depending on a bending method. Various embodiments for forming the elastic support portion will be described in more detail below.

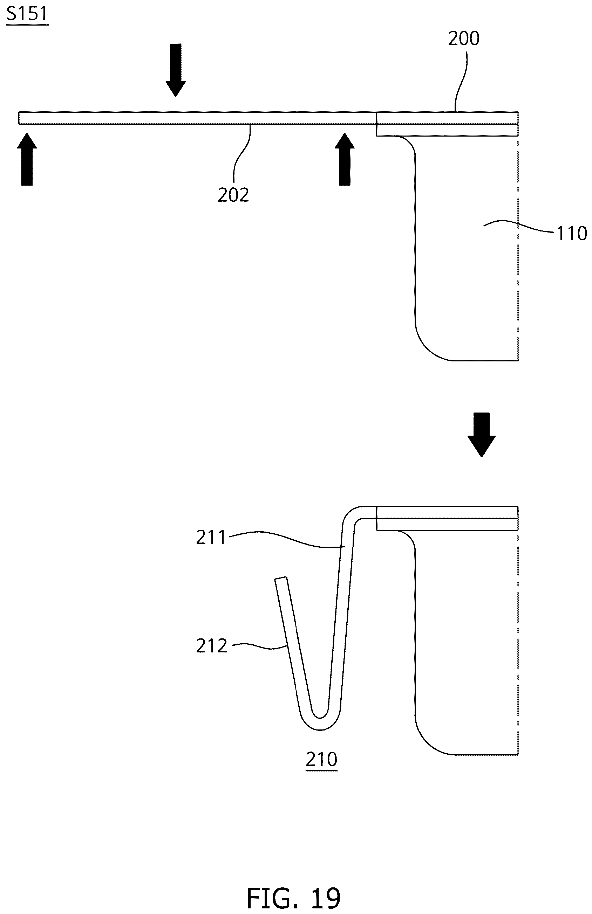

FIG. 19 to FIG. 22 illustrate examples for forming elastic support portions in a method for manufacturing a secondary battery according to some embodiments of the present disclosure.

Referring to FIG. 19, in the forming (S151) of the elastic support portion 210 according to the embodiment of FIG. 5, the elastic support portion 210 may be formed by bending the protrusion 202 in a manner that downwardly presses the central region of the protrusion 202 while supporting opposite ends of the protrusion 202. In this way, the connecting portion 211 bent downward from the case cover 200 and the catch portion 212 bent upward to face the connecting portion 211 may be formed.

An end portion of the catch portion 212 may be formed to be disposed or arranged at a position lower than an end portion of the connecting portion 211. For example, the end portion of the catch portion 212 may be formed to be disposed or arranged at a position lower than the height of the case cover 200. The connecting portion 211 may be disposed or arranged to be inclined in a direction away from the case 110 while being bent downward. The catch portion 212 may be disposed or arranged to be inclined in a direction away from the connecting portion 211 while being bent upward. In some embodiments, the connecting portion 211 and the catch portion 212 may substantially have a V-shape.

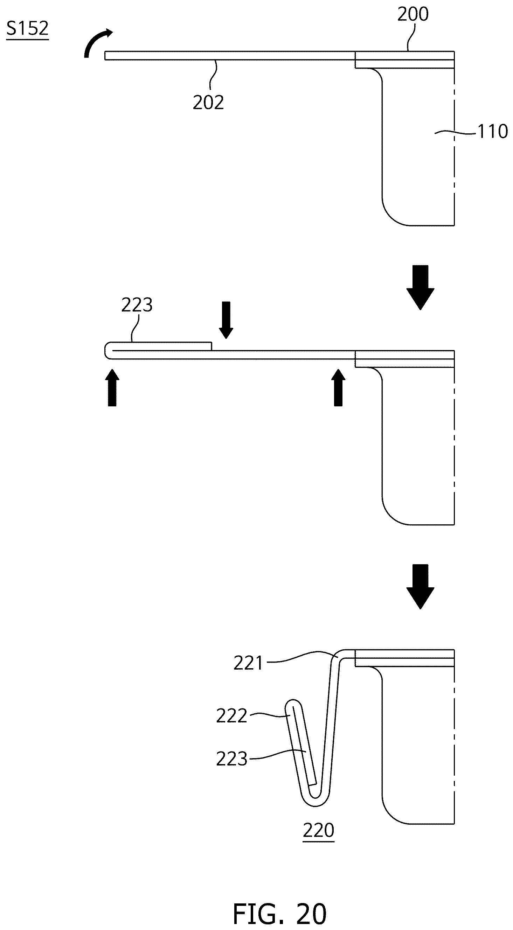

Referring to FIG. 20, in the forming (S152) of the elastic support portion 220 according to the embodiment of FIG. 6, the elastic support portion 220 may be formed by folding the end portion of the protrusion 202 once to first form the reinforcing portion 223, and bending the protrusion 202 in a manner that downwardly presses the central region of the protrusion 202 while supporting opposite ends of the protrusion 202. In this way, the connecting portion 221 bent downward from the case cover 200 and the catch portion 222 bent upward to face the connecting portion 221 may be formed.

A portion to which the catch portion 222 and the reinforcing portion 223 are connected may be bent to be disposed or arranged at a position lower than an end portion of the connecting portion 221. For example, the portion to which the catch portion 222 and the reinforcing portion 223 are connected may be formed to be disposed or arranged at a position lower than the height of the case cover 200. The connecting portion 221 may be disposed or arranged to be inclined in a direction away from the case 110 while being bent downward. The catch portion 222 may be disposed or arranged to be inclined in a direction away from the connecting portion 221 while being bent upward. In some embodiments, the connecting portion 221 and the catch portion 222 may substantially have a V-shape.

The reinforcing portion 223 may be formed by folding an end portion of the protrusion 202 once. In some embodiments, a portion overlapping the reinforcing portion 223 may be the catch portion 222. In some embodiments, the reinforcing portion 223 is disposed or arranged to overlap the catch portion 222 to allow increased or reinforced strength of the catch portion 222. For example, the portion where the catch portion 222 and the reinforcing portion 223 overlap is caught and supported on the inner surface of the housing The increased or reinforced thickness of the portion where the elastic support portion 220 is coupled to the housing allows for increased strength to the portion. The reinforcing portion 223 and the connecting portion 221 may be disposed or arranged to face each other by folding the reinforcing portion 223 and bending the protrusion 202 in a same direction.. However, the present disclosure is not limited thereto, and the reinforcing portion 223 may be folded to be disposed or arranged on a surface opposite to a surface facing the connecting portion 221 in the locking portion 222.

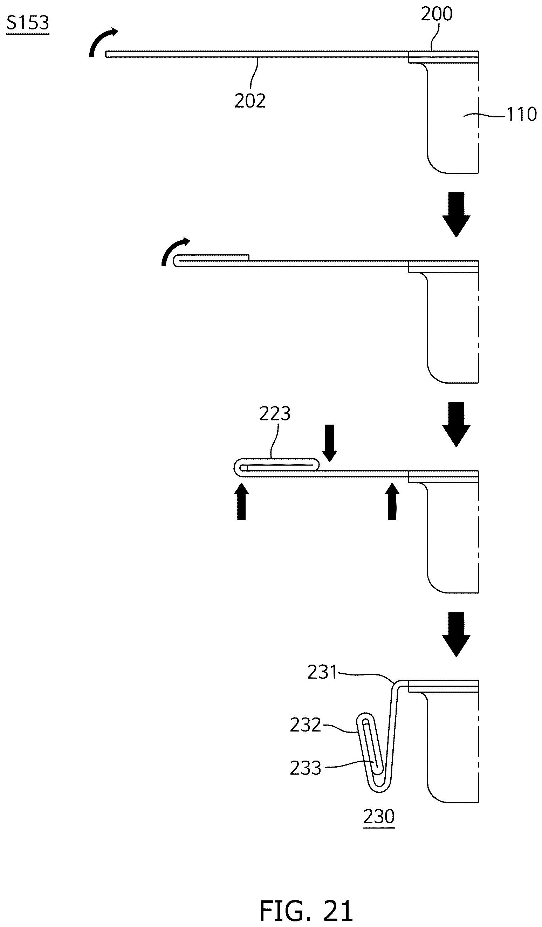

Referring to FIG. 21, in the forming (S153) of the elastic support portion 230 according to the embodiment of FIG. 7, the elastic support portion 230 may be formed by folding the end portion of the protrusion 202 twice to first form the reinforcing portion 233, and bending the protrusion 202 in a manner that downwardly presses the central region of the protrusion 202 while supporting opposite ends of the protrusion 202. In this way, the connecting portion 231 bent downward from the case cover 200 and the catch portion 232 bent upward to face the connecting portion 231 may be formed.

A portion to which the catch portion 232 and the reinforcing portion 233 are connected may be formed to be disposed or arranged at a position lower than an end portion of the connecting portion 231. For example, the portion to which the catch portion 232 and the reinforcing portion 233 are connected may be formed to be disposed or arranged at a position lower than the height of the case cover 200. The connecting portion 231 may be disposed or arranged to be inclined in a direction away from the case 110 while being bent downward. The catch portion 232 may be disposed or arranged to be inclined in a direction away from the connecting portion 231 while being bent upward. In some embodiments, the connecting portion 231 and the catch portion 232 may substantially have a V-shape.

The reinforcing portion 233 may be formed by folding the end portion of the protrusion 202 twice. In some embodiments, a portion overlapping the reinforcing portion 233 may be the catch portion 232. In some embodiments, the reinforcing portion 233 is disposed or arranged to overlap the catch portion 232 to allow increased or reinforced strength of the catch portion 232. For example, the portion where the catch portion 232 and the reinforcing portion 233 overlap is caught and supported on the inner surface of the housing. The increased or reinforced thickness of the portion where the elastic support portion 230 is coupled to the housing allows for increased strength to the portion. Although it is described that the end portion of the protrusion 202 is folded twice to form the reinforcing portion 233 based on the embodiment of FIG. 7, the present disclosure is not limited thereto, and the end portion of the protrusion 202 may be folded three or more times to form the reinforcing portion. The reinforcing portion 233 and the connecting portion 231 may be disposed or arranged to face each other by folding the reinforcing portion 233 and bending the protrusion 202 in a same direction. However, it is not limited thereto, and the reinforcing portion 233 may be folded to be disposed or arranged on a surface opposite to a surface facing the connecting portion 231 in the locking portion 232.

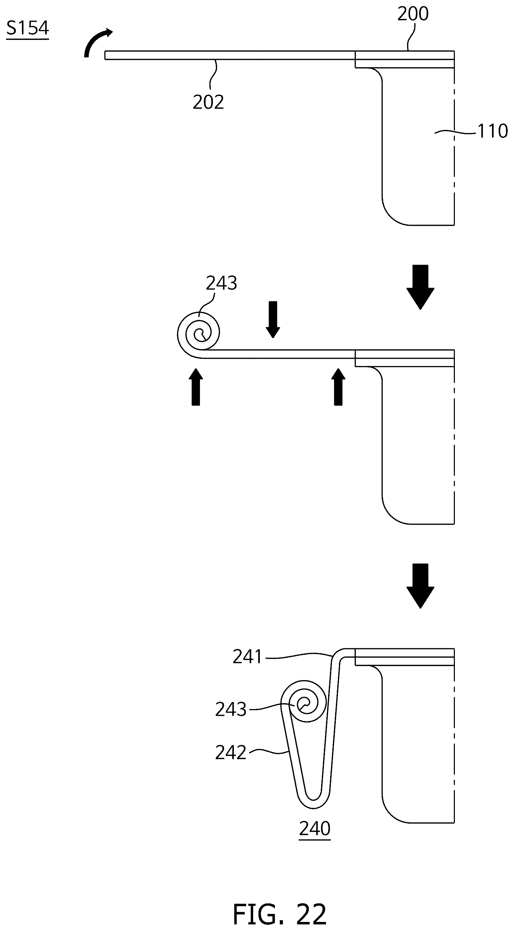

Referring to FIG. 22, in the forming (S154) of the elastic support portion 240 according to the embodiment of FIG. 8, the elastic support portion 240 may be formed by rounding and rolling the end portion of the protrusion 202 to first form the reinforcing portion 243 and bending the protrusion 202 in a manner that downwardly presses the central region of the protrusion 202 while supporting opposite ends of the protrusion 202. In this way, the connecting portion 241 bent downward from the case cover 200 and the catch portion 242 bent upward to face the connecting portion 241 may be formed.

The reinforcing portion 243 formed at the end portion of the catch portion 242 may be formed to be disposed or arranged at a position lower than the end portion of the connecting portion 241. For example, the reinforcing portion 243 may be disposed or arranged at a position lower than the height of the case cover 200. The connecting portion 241 may be disposed or arranged to be inclined in a direction away from the case 110 while being bent downward. The catch portion 242 may be disposed or arranged to be inclined in a direction away from the connecting portion 241 while being bent upward. In some embodiments, the connecting portion 241 and the catch portion 242 may substantially have a V-shape.

The reinforcing portion 243 may be formed by rolling in a roll shape, and may be disposed or arranged at an end portion of the catch portion 242 to reinforce the strength of the catch portion 242. For example, the reinforcing portion 243 is caught and supported on the inner surface of the housing 20. The increased or reinforced thickness of the portion where the elastic support portion 240 is coupled to the housing 20 allows for increased strength to the portion. The reinforcing portion 243 may be disposed or arranged to face the connecting portion 241. However, it is not limited thereto, and the reinforcing portion 243 may be disposed or arranged so as to face an opposite surface of a surface facing the connecting portion 241 in the locking portion 242.

Referring to FIG. 12, the forming of the elastic support portion (S150) may include forming an uneven knurled groove 224 with a preset or predetermined pattern by knurling a region of the opposite surface of the surface facing the connecting portion 221 in the catch portion 222.

The knurled groove 224 formed in this way may provide frictional force. Based on the user's finger or the tool contacting the outer surface of the catch portion 222 and presses the catch portion 222, the knurled groove 224 may provide frictional force so that the finger or the tool does not slip and may stably apply external force.

Referring to FIG. 13, in some embodiments, the forming of the elastic support portion (S150) may include forming a through hole 225 penetrating the catch portion 222. The user may apply an external force while inserting the finger or the tool into the through hole 225 formed in the catch portion 222, to allow the finger or the tool to stably apply the external force without slipping. The through hole 225 may be formed by penetrating the catch portion 222 and the reinforcing portion 223.

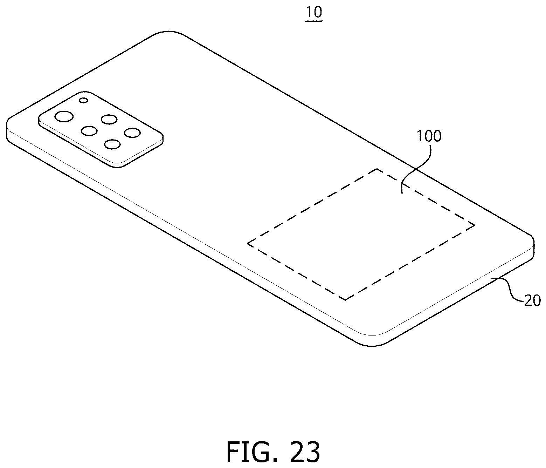

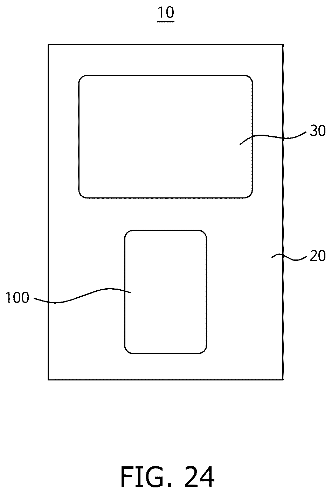

FIG. 23 illustrates a perspective view of an example electronic device according to some embodiments of the present disclosure. FIG. 24 illustrates an example of a secondary battery disposed or arranged in an electronic device according to some embodiments of the present disclosure.

Referring to FIG. 23 and FIG. 24, an electronic device 10 according to some embodiments of the present disclosure may include an operating unit 30 that performs a preset operation, a housing 20 in which the operating unit 30 is accommodated, and a secondary battery that is detachably accommodated in the housing 20 and supplies power to the operating unit 30.

The electronic device 10 including the secondary battery 100 may be a smart phone, but the present disclosure is not limited thereto, and the secondary battery 100 may be used in various devices that use electric energy stored in the secondary battery 100 as a power source and use high-performance and high-precision protection circuits.

The operating unit 30 may include various operating units that are supplied with power and driven by electrical energy. For example, the operating unit 30 may include an application processor (AP) of a portable electronic device, a central processing unit (CPU), and/or a motor control unit (MCU) of an electric mobile device.

As an example, a printed circuit board (not shown) having signal transmission wiring is disposed or arranged inside the housing 20, and the operating unit 30 may be mounted on the printed circuit board to be electrically connected to other components of the electronic device 10.

The housing 20 may accommodate the operating unit 30 and the secondary battery 100 therein, and may provide an external appearance of the electronic device 10. The housing 20 may support the operating unit 30 and the secondary battery 100 disposed or arranged therein, and may protect components accommodated therein from an external impact. In the drawing, the shape of the housing 20 is illustrated as a square block, but it is not limited thereto, and may be provided in various shapes depending on the type and purpose of the electronic device 10.

The secondary battery 100 is coupled to the inside of the housing 20 and may stably supply power to the operating unit 30. For example, the secondary battery 100 may have a configuration substantially the same as or similar to that of the secondary battery 100 described with reference to FIG. 1 to FIG. 15.

For example, the secondary battery 100 may be disposed or arranged in a power area inside the housing 20 and connected to a power terminal of the printed circuit board. In some embodiments, the operating unit 30 may be driven using the electric energy stored in the secondary battery 100.

The secondary battery 100 may include a battery cell in which the electrode assembly is accommodated inside the case 110 made of stainless steel, and the protection circuit module 400 disposed or arranged outside the battery cell.

As shown in FIG. 10, the secondary battery 100 may be coupled to the housing 20 by an elastic support portion 220 provided in the case cover 200. In some embodiments, the secondary battery 100 may be easily separated from the housing 20 after the external force (F) is applied to the elastic support portion 220 to elastically deform the elastic support portion 220.

Although the present disclosure has been described with reference to embodiments and drawings illustrating aspects thereof, the present disclosure is not limited thereto. Various modifications and variations can be made by a person skilled in the art to which the present disclosure belongs within the scope of the technical spirit of the present disclosure and the claims and their equivalents, below.

### [DESCRIPTION OF SOME REFERENCE SYMBOLS]

| | | | |
|---|---|---|---|
| 10: | electronic device | 20: | housing |
| 23: | support protrusion | 30: | operating unit |
| 100: | secondary battery | 110: | case |
| 200: | case cover | 220: | elastic support portion |
| 221: | connecting portion | 222: | catch portion |
| 223: | reinforcing portion | 224: | knurled groove |
| 225: | through hole | 300: | electrode assembly |
| 400: | protection circuit module | 410: | support groove |

## Claims

1. A secondary battery (100) comprising:
an electrode assembly (300);
a case (110) accommodating the electrode assembly (300) and comprising an electrode terminal (111, 112) coupled to an electrode tab (310, 320) of the electrode assembly (300);
a case cover (200) on an open side of the case (110); and
a support portion (201) protruding from the case cover (200) to one side and coupled to a housing (20) accommodating the case (110), wherein the support portion (201) is configured to be elastically deformed and released from the housing (20) based on receiving an external force.

2. The secondary battery (100) as claimed in claim 1, wherein the support portion (210) comprises:
a connecting portion (211) extending from the case cover (200) and bent downward; and
a catch portion (212) extending from the connecting portion (211), bent upward to face the connecting portion (211), wherein the catch portion (212) is configured to be supported based on being caught on an inner surface of the housing (20).

3. The secondary battery (100) as claimed in claim 2, wherein the support portion (220) further comprises a reinforcing portion (223) extending from the catch portion (222) and overlapping the catch portion (222), wherein the reinforcing portion (223) is a folded portion connected to the catch portion (222).

4. The secondary battery (100) as claimed in claim 2, wherein the support portion (230) further comprises a reinforcing portion (233) extended from the catch portion (232) and overlapping the catch portion (232), wherein the reinforcing portion (233) includes a folded portion generated by folding a portion connected to the catch portion (232) in a folded state at least once.

5. The secondary battery (100) according to any one of the preceding claims when combined with claim 2, wherein the support portion (240) further comprises a reinforcing portion (243) extending from the catch portion (242) and formed by rolling and rounding an end portion thereof.

6. The secondary battery (100) according to any one of the preceding claims when combined with claim 2, wherein the catch portion (222) comprises a groove (224) on a surface opposite to a surface facing the connecting portion (221), wherein the groove (224) has a pattern.

7. The secondary battery (100) according to any one of the preceding claims when combined with claim 2, wherein the support portion (220) further comprises a through hole (225) penetrating the catch portion (222).

8. The secondary battery (100) according to any one of the preceding claims, further comprising a protection circuit module (400) coupled to a second side of the case (110) and electrically connected to the electrode terminal (111, 112),
wherein the protection circuit module (400) comprises a support groove (410) recessed inward from opposite ends thereof and supported based on being caught on a support protrusion (23) formed in the housing (20).

9. A method for manufacturing a secondary battery (100), comprising:
accommodating an electrode assembly (300) in a case (110) having an open side and comprising a first flange portion (114) formed along a circumference;
arranging a case cover (200) comprising a second flange portion (204) formed along the circumference and a protrusion (202) protruding to one side on the open side of the case (110);
welding the first flange portion (114) and the second flange portion (204);
cutting and removing an outer side of a welded area of the first flange portion (114) and the second flange portion (204); and
forming a support portion (201) by bending the protrusion (202).

10. The method for manufacturing the secondary battery (100) as claimed in claim 9, wherein the forming of the support portion (210) comprises forming, by bending the protrusion (202), a connecting portion (211) bent downward from the case cover (200) and a catch portion (212) bent upward to face the connecting portion (211).

11. The method for manufacturing the secondary battery (100) according to any one of the preceding claims 9 or 10, wherein the forming of the support portion (220, 230) comprises:
forming a reinforcing portion (223) by folding an end portion of the protrusion (202) at least once, and
forming, by bending the protrusion (202), a connecting portion (221) bent downward from the case cover (200) and a catch portion (222) bent upward to face the connecting portion (221).

12. The method for manufacturing the secondary battery (100) according to any one of the preceding claims 9 to 11, wherein the forming of the support portion (240) comprises:
forming a reinforcing portion (243) by rounding and rolling an end portion of the protrusion (202); and
forming, by bending the protrusion (202), a connecting portion (241) bent downward from the case cover (200) and a catch portion (242) bent upward to face the connecting portion (241).

13. The method for manufacturing the secondary battery (100) according to any one of the preceding claims 9 to 12, wherein the forming of the support portion (220) comprises forming a groove (224) having a pattern by knurling an area of an opposite surface of a surface facing the connecting portion (221) in the catch portion (222).

14. The method for manufacturing the secondary battery (100) according to any one of the preceding claims 9 to 13, wherein the forming of the support portion (220) comprises forming a through hole (225) penetrating the catch portion (222).

15. An electronic device (10) comprising:
an operating unit (30) that performs a preset operation;
a housing (20) accommodating the operating unit (30); and
a secondary battery (100) that is detachably accommodated in the housing (20) and supplies power to the operating unit (30),
wherein the secondary battery (100) is a secondary battery (100) according to any one of claims 1 to 8.
